# EUROPEAN PATENT APPLICATION

(11) **EP 1 300 064 A1**
(43) Date of publication of application: **09.04.2003**
(21) Application number: 01932105.8
(22) Date of filing: 17.05.2001
(51) Int. Cl.: A01D 34/76

(54) **MOA DEVICE DRIVING FORCE TRANSMISSION STRUCTURE, MOA CASING, MOA TRACTOR, AND TRAVELING SYSTEM TRANSMISSION STRUCTURE OF VEHICLE**

(30) Priority: 22.05.2000 JP 2000150137
(71) Applicant: Seirei Industry Co., Ltd., Okayama-shi, Okayama 702-8515 (JP); YANMAR AGRICULTURAL EQUIPMENT CO., LTD., Osaka-fu 530-0013 (JP)
(72) Inventor: INOUE, Yuji c/o Seirei Insustry Co., Ltd., Okayama-shi, Okayama 702-8515 (JP); KANOU, Kenshirou c/o Seirei Industry Co., Ltd., Okayama-shi, Okayama 702-8515 (JP)
(74) Representative: Weise, Reinhard, Dipl.-Ing.
(86) International application number: JP0104103
(87) International publication number: WO01091539

(57) **Abstract**

According to the present invention, there is provided a drive-power transmission structure for a mower device for transmitting drive power from a driving source disposed on a chassis to the mower device, which has plural rotating shafts and disposed under the chassis between front wheels and rear wheels. The drive-power transmission structure includes a main-drive shaft for the mower device, which is operatively connected with the driving source, in which the main-drive shaft is connected with the plural rotating shafts via shafts. With the drive-power transmission structure having the above arrangement, it is possible to achieve secured and efficient drive-power transmission between the main-drive shaft and the mower device.

## Description

### FIELD OF THE INVENTION

This invention relates to a running-power transmission structure in a vehicle such as a mower tractor, a grass discharge structure in a mid-mount mower tractor, a drive-power transmission structure in a mower device, and a mower casing.

### BACKGROUND OF THE INVENTION

Demands exist for a vehicle such as a mower tractor. One of the demands is to create a space in a desirable portion, thereby achieving improved design flexibility, downsizing of the vehicle and other purposes. For example, in a mid-mount mower tractor with a mower device mounted under the mid-section of a chassis in its longitudinal direction, it is desirable to create a grass discharge route between front wheels or rear wheels, or grass discharge routes between the front wheels and the rear wheels so as to downsize the vehicle and achieve other advantages.

In a vehicle with a mower device having plural rotational shafts, it is desirable to achieve high efficient power transmission with a simplified structure between a drive source and the plural rotational shafts. For example, U.S. Patent No. 5,836,144 discloses the arrangement that employs a belt transmission with pulleys to achieve power transmission between a pair of rotational shafts. The use of a belt requires a belt tensioning adjustment mechanism, which invites a complicated structure and may cause a likelihood that the belt is cut or any other problems are caused.

It is also desirable to enable the mower device to efficiently discharge cut grass. In this regard, for example, Japanese Patent Application Laid-open No. Sho-58-129907 discloses a mower device including a pair of vertical shafts aligned parallel to each other in a vehicle lateral direction, a pair of cutting blades to be rotated in opposite directions respectively by the pair of vertical shafts and a casing having a pair of outer circumferential walls respectively surrounding the rotational trajectories of the pair of cutting blades, in which a pair of inner circumferential portions are respectively located on the radially inward sides of the pair of outer circumferential walls; a pair of grass discharge spaces, which respectively correspond to the pair of cutting blades, are created by the inner circumferential portions and the outer circumferential walls; and the pair of discharge spaces are joined together between the pair of vertical shafts to have a unified space having a diameter, which gradually increases as it advances upwards. According to the description of this publication, an attempt is made to achieve an improved efficiency in grass discharge operation by having the discharge space with its downstream side gradually increased in diameter as it advances upwards. However, it cannot be expected to sufficiently improve discharge efficiency by this disclosed arrangement since its discharge space has a constant width.

In order to solve the above problems, it is an object of the present invention to provide a vehicle that is capable of creating a free space between a pair of front wheels or pair of rear wheels.

It is another object of the present invention to provide a running-power transmission structure for a vehicle for transmitting running power from a driving source to a pair of driving rear wheels, which is capable of creating a free space between the pair of driving rear wheels.

It is still another object of the present invention to provide a simplified drive-power transmission structure for a mower device for transmitting drive power from a driving source to a pair of rotational shafts in the mower device, which is capable of providing an improved transmission efficiency of drive power to the pair of rotational shafts.

It is yet another object of the present invention to provide a mower casing for a mower device equipped with a pair of cutting blades, which has a simplified structure that is capable of providing an improved efficiency in discharging grass.

It is another object of the present invention to provide a mower tractor that is capable of creating a free space between a pair of driving wheels, as well as stably supporting the pair of driving wheels.

### SUMMARY OF THE INVENTION

To achieve the above objects, according to the present invention, there is provided a drive-power transmission structure for a mower device for transmitting drive power from a driving source disposed on a chassis to the mower device, which has plural rotating shafts and disposed under the chassis between front wheels and rear wheels. The drive-power transmission structure includes a main-drive shaft for the mower device, which is operatively connected with the driving source, in which the main-drive shaft is connected with the plural rotating shafts via shafts.

With the drive-power transmission structure having the above arrangement, it is possible to achieve secured and efficient drive-power transmission between the main-drive shaft and the mower device.

Preferably, the drive-power transmission structure further includes a pair of connecting shafts respectively have front ends and rear ends, in which the plural rotating shafts are a pair of vertical rotating shafts located at substantially the same position relative to the longitudinal direction of the chassis; the main-drive shaft is designed to transmit drive power from a front side to a rear side in the longitudinal direction of the chassis, and has a rear end terminated on the front side of the pair of vertical rotating shafts in the longitudinal direction of the chassis; and the front ends of the pair of connecting shafts are connected with the rear end of the main-drive shaft, while the rear ends thereof are respectively connected with the pair of rotating shafts so as to provide connections between the main-drive shaft and the plural rotating shafts.

More preferably, the main-drive shaft is aligned along the longitudinal direction of the chassis and in the center of the width of the chassis; and the pair of connecting shafts respectively have the front ends located closer to the center of the width of the chassis, and the rear ends on the outer sides of the front ends relative to the width direction of the chassis and on the rear side of the front ends relative to the longitudinal direction of the chassis.

Also, to achieve the above objects, there is provided a mower casing for surrounding rotational trajectories of first and second cutting blades that are rotated in the opposite directions by first and second vertical rotating shafts aligned parallel to each other, the mower casing being formed to have a common discharge opening for discharging cut grass, the common discharge opening being located between the first and second vertical rotating shafts and opened in a direction orthogonal to common vertical plain surface, on which the first and second vertical rotating shafts lie. The mower casing includes an upper wall located above the first and second cutting blades so as to support the first and second vertical rotating shafts; first and second outer circumferential walls extending downwards from the upper wall so as to surround the rotational trajectories of the first and second cutting blades; first and second inner circumferential portions respectively located on the radially inner sides of the first and second outer circumferential walls, and respectively defining first and second conveying spaces in cooperation with the first and second outer circumferential walls so as to convey cut grass therethrough. In this arrangement, the first and second conveying spaces are joined together on the downstream side relative to rotational directions of the first and second cutting blades and communicated with the common discharge opening; the first and second outer circumferential walls respectively have circular centers located at substantially the same positions as axes of the first and second vertical rotating shafts; the first inner circumferential portion has a circular center located spaced farther apart from the common discharge opening than a first vertical plain surface is. The first vertical plain surface, on which the first vertical rotating shaft lies, is orthogonal to the common vertical plain surface. The second inner circumferential portion has a circular center located spaced farther apart from the common discharge opening than a second vertical plain surface is, in which the second vertical plain surface, on which the second vertical rotating shaft lies, is orthogonal to the common vertical plain surface.

With the mower casing having the above arrangement, it is possible to gradually increase the horizontal width of each of the conveying spaces in the rotational directions of the cutting blades, thereby allowing cut grass to be efficiently discharged.

Preferably, the common discharge opening, and the circular centers of the first and second inner circumferential portions are located on the downstream side of the common vertical plain surface relative to the rotational directions of the first and second cutting blades.

More preferably, the first and second conveying spaces respectively have diameters increased in the upward direction as they advance along the rotational directions of the first and second cutting blades.

Furthermore, to achieve the above objects, there is provided a mower tractor that includes a chassis; a driving source supported by the chassis; front wheels supported by the chassis; driving rear wheels supported by the chassis; a mower device located under the chassis between the front wheels and the driving rear wheels so as to have a grass discharge opening located within a range defined by the width of the chassis and directed rearwards in a longitudinal direction of the chassis; a dividing device provided on the front side of the driving rear wheels in the longitudinal direction of the chassis, in which the dividing device includes a pair of output shafts and is operatively connected with the driving source so as to divide drive power from the driving source and output the same through the pair of output shafts. In this arrangement, the driving rear wheels are driven by a pair of driving axles, which are spaced apart from each other; the pair of output shafts and the pair of driving axles are respectively connected with each other via shafts so as to form a space between the pair of rear wheels; the chassis has a rear-wheel support member for supporting the rear wheels, the rear-wheel support member including a pair of side walls for respectively supporting the pair of driving axles and an upper wall extending between the pair of side walls, and being formed into a hollowed box shape with front and rear openings; and the rear-wheel support member is located within the space so as to have the front opening being communicated with a discharge opening of the mower device.

With the mower tractor having the above arrangement, it is possible to stably support the pair of rear wheels, while creating a free space between the pair of rear wheels.

Still furthermore, to achieve the above objects, there is provided a running-power transmission structure for a vehicle for transmitting running power from a driving source disposed on a chassis to a pair of driving wheels, which includes: a dividing device having a pair of output shafts and being operatively connected with the driving source so as to divide drive power from the driving source and output the same through the pair of output shafts; wherein the dividing device is located closer to the driving source than the pair of driving wheels are; and the pair of output shafts of the dividing device are operatively connected with input parts of the pair of driving wheels.

In the running-power transmission structure having the above arrangement, it is possible to create a free space between the pair of driving wheels, while maintaining a high efficiency in transmitting running power to the driving wheels. Accordingly, for example, where this running-power transmission structure is applied to a mid-mount mower tractor or the like, it is possible to create a sufficient discharge space for cut grass between the pair of driving wheels, while maintaining a high efficiency in transmitting running power to the driving wheels.

Preferably, the pair of driving wheels are rear wheels; the dividing device is a differential gear device having a pair of output shafts extending in the width direction of the chassis; and the pair of output shafts respectively have outer ends relative to the width direction of the chassis, the outer ends being located closer to the center of the width of the chassis than the input parts of the pair of driving wheels are.

More preferably, a pair of running-power connecting shafts are provided between the pair of output shafts of the differential gear device and the input parts of the pair of driving wheels; and connections between the running-power connecting shaft, the pair of output shafts and the input parts of the pair of driving wheels are made via bevel gears.

### BRIEF DESCRIPTION OF THE DRAWINGS

FIG. 1 is a model view illustrating a schematic side view of a transmission structure of a mower tractor, to which one embodiment of the present invention is applied.
FIG. 2 is a model view illustrating a schematic plan view of the transmission structure of the mower tractor illustrated in FIG. 1.
FIG.3 is a plan view of the mower tractor of FIG. 1 with parts thereof partially omitted, illustrating a running power transmission structure of the mower tractor.
FIG. 4 is a cross section of the running power transmission structure of FIG. 3 with a part thereof illustrated in detail.
FIGS. 5(a)-5(c) are respectively front, side and rear views of a rear-wheel support member of a chassis in the mower tractor of FIG. 1.
FIG. 6 is a plan view of a mower device and its proximity in the mower tractor of FIG. 1 with parts thereof partially omitted.
FIG. 7 is a cross section of the drive-power transmission structure for the mower device illustrated in FIG. 6 with a part thereof illustrated in detail.
FIGS. 8(a) and 8(b) are respectively side and bottom plan views of a mower casing in the mower tractor of FIG. 1.
FIG. 9 is a view as viewed from line B-B in FIG. 8.
FIG. 10 is a rear view illustrating a modified example of the mower casing illustrated in FIGS. 8 and 9.

### DETAILED DESCRIPTION OF THE PREFERRED EMBODIMENTS

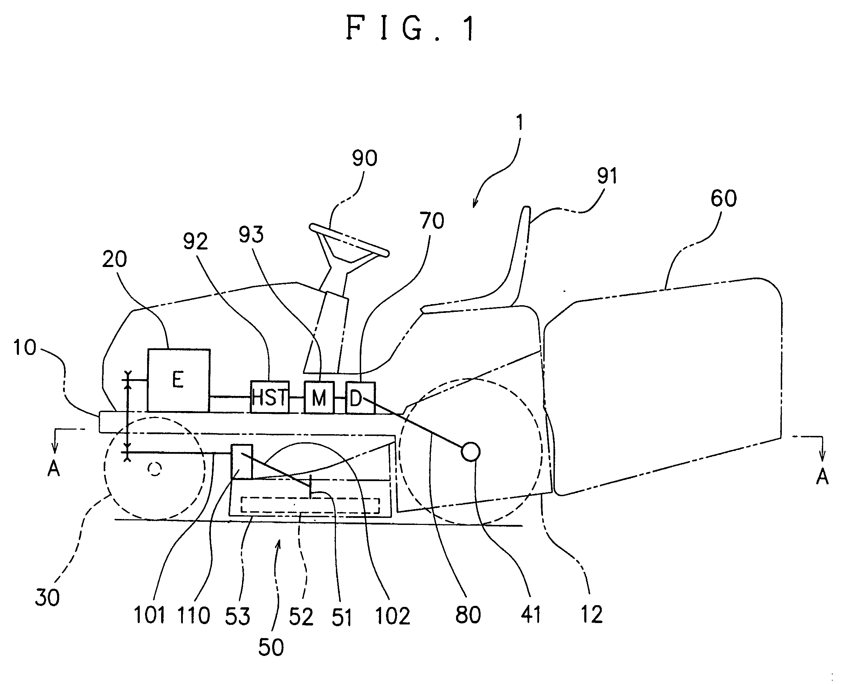

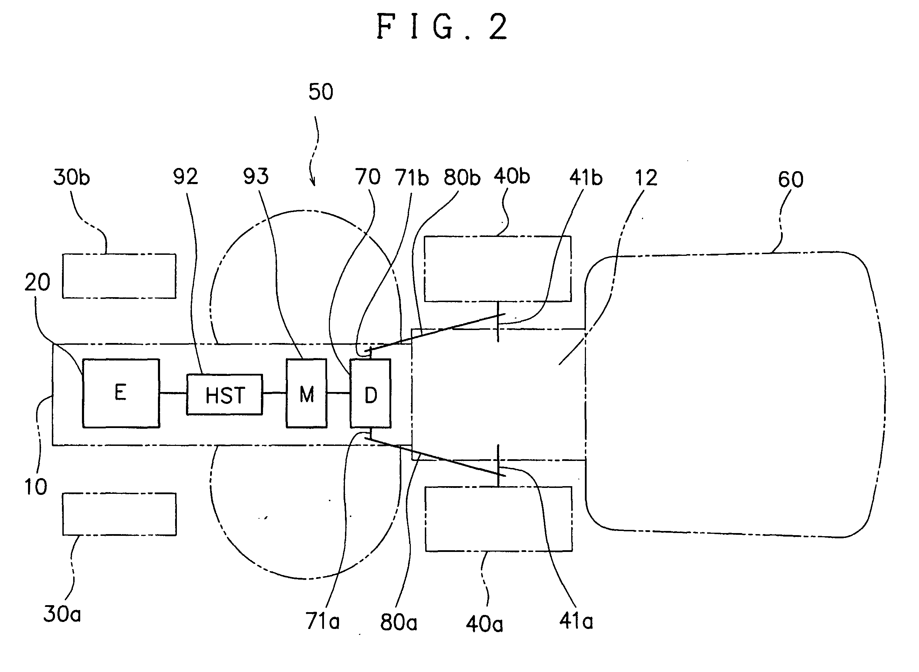

The description will be hereinafter made for mower tractor 1, to which one embodiment of the present invention has been applied, with reference to the attached drawings. FIGS. 1 and 2 are model views respectively illustrating a schematic side view and a schematic plan view of a transmission structure of the mower tractor.

As illustrated in FIGS. 1 and 2, the mower tractor 1 includes chassis 10, driving source 20 supported on the chassis 10, a pair of front wheels 30a, 30b and a pair of rear wheels 40a, 40b respectively supported on the front and rear sides of the chassis 10, mower device 50 disposed under the chassis 10 between the front wheels 30 and the rear wheels 40, and collection container 60 detachably attached to the rear side of the chassis 10. Reference numerals 90 and 91 in FIG. 1 respectively represent a steering wheel and a seat.

The mower tractor 1 employs a center discharge system, which omits the necessity to provide a conveying mechanism such as a thrower or a grass collection conduit, which protrudes from the chassis or the like, so as to downsize the tractor itself and manufacture the same at a low cost. That is, the mower tractor 1 has an opening in the mower device 50, through which grass is discharged, positioned within the range defined by the width of the chassis, and the mower device 50 arranged so as to be directed rearwards in a longitudinal direction of the chassis. Grass cut by the mower device 50 passes through between the pair of rear wheels 40a, 40b and is stored in the collection container 60. This arrangement omits the necessities to provide a conveying mechanism such as a thrower and have the grass collection conduit protruding from the chassis, and hence achieves a downsized tractor and a low manufacturing cost.

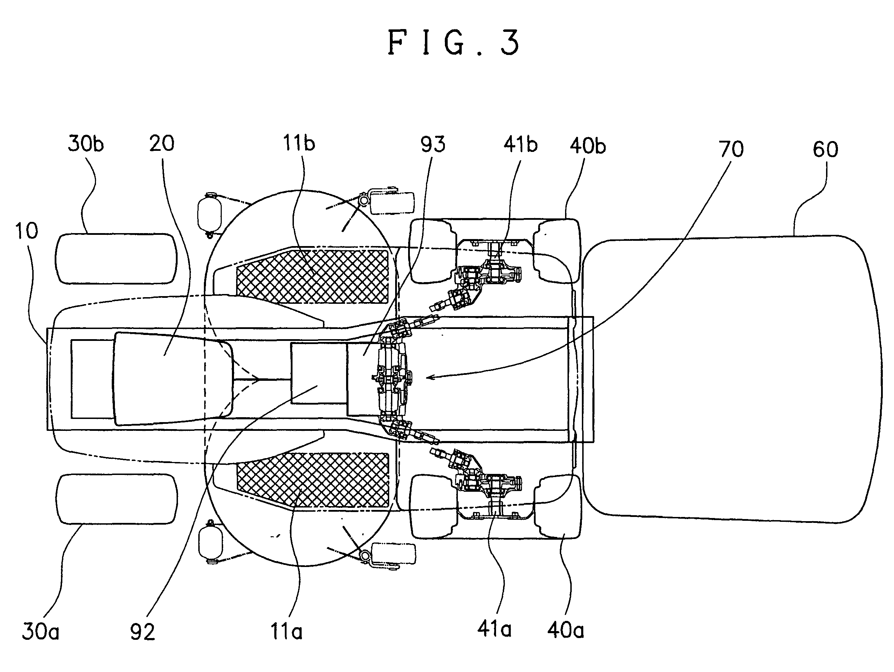

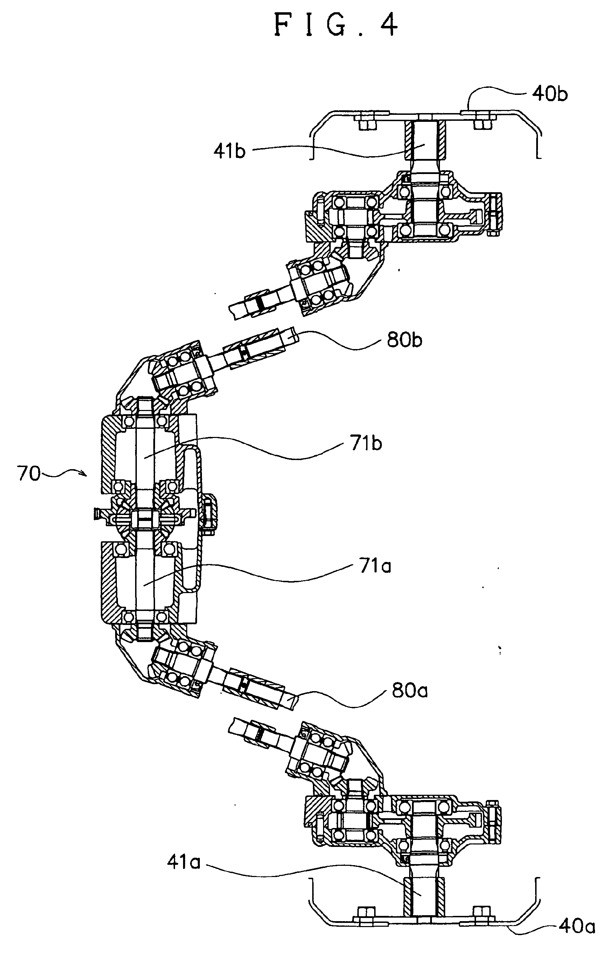

Now, the description will be made for a running-power transmission structure extending from the driving source to a pair of driving wheels in the mower tractor 1. FIG. 3 is a plan view of the mower tractor 1 with constitutional parts thereof partially omitted, illustrating the running-power transmission structure of the mower tractor 1. FIG. 4 is a cross section of the running-power transmission structure with a part thereof illustrated in detail. As illustrated in FIGS. 1-4, the pair of rear wheels 40a, 40b in the mower tractor 1 are designated as the driving wheels.

The running-power transmission structure includes a pair of driving axles 41a, 41b for respectively rotating the pair of rear wheels 40a, 40b serving as the driving wheels, and differential gear device 70 that has a pair of output shafts 71a, 71b so as to divide drive power from the driving source 20, which is operatively connected therewith, and output it via the pair of output shafts 71a, 71b.

The differential gear device 70 is arranged so as to have the pair of output shafts 71a, 71b extending away from each other in the width direction of the chassis 10 and positioned closer to the driving source 20 than the pair of driving axles are. In this embodiment, the driving source 20 is positioned closer to the front side of the chassis 10 and the rear axles 40 are designated as the driving axles, so that the pair of output shafts 71a, 71b are located on the front side of the rear axles 41a, 41 in the longitudinal direction of the chassis.

In the mower tractor 1, as illustrated in FIGS. 1-4, HST 92 and geared transmission 93 are interposed between the driving source 20 and the differential gear device 70 so as to serve as a part of the running-power transmission structure. That is, the differential gear device 70 is connected with the driving source 20 via the HST 92 and the geared transmission 93.

The running-power transmission structure further includes a pair of running-power connecting shafts 80a, 80b, which respectively provide connections between the pair of output shafts 71a, 71b of the differential gear device 70 and a pair of driving axles 41a, 41b.

The thus arranged running-power transmission structure produces the following desirable effects:

The differential gear device 70, which divides drive power from the driving source 20 and outputs it via the pair of output shafts 71a, 71b, which extend away from each other in the width direction of the chassis, is disposed so that the pair of output shafts 71a, 71b are located on the front side of the rear axles 41 serving as the driving axles. Also, the pair of output shafts 71a, 71b are respectively connected with the pair of driving axles 41a, 41b via the shafts. As a result, drive power can be securely transmitted to the driving axles, while a free space can be created between the pair of rear axles 40a, 40b. Therefore, in the mower tractor 1, grass discharged from the mower device 50 can be stored in the collection container 60 without obstruction by the rear axles 41.

In this embodiment, while the aforesaid free space is utilized as a grass conveying passage since the description has been made for the mower tractor of the center discharge system, it can be properly utilized for various purposes according to needs. That is, the free space may be utilized as a mounting space for a digging harvester or the like in any other type of a vehicle such as a tractor having a high-floor type.

Also, in this embodiment, the HST 92, the geared transmission 93 and the differential gear device 70 are disposed along the longitudinal direction of the chassis and substantially in the center of the width of the chassis. That is, of the constitutional elements of the running-power transmission structure, those on the upstream side of the constitutional element at which drive power is divided are disposed substantially in the center of the width of the chassis. With this mower tractor, it is possible to dispose step positions 11a, 11b of the driver with the constitutional elements (from the HST to the differential gear device) therebetween, which elements are disposed along the longitudinal direction of the chassis (see FIG. 3). Thus, it is possible to lower the vertical positions of the step positions 11a, 11b of the driver, thereby limiting the vehicle height so as to lower the center of gravity of the vehicle, and hence achieving the downsized vehicle.

Now, the description will be made in detail for the grass conveying route from the mower device 50 to the collection container 60. As described above, in the mower tractor 1, the free space between the pair of rear wheels constitutes a part of the grass conveying route. Specifically, rear-wheel support member 12, which serves as a part of the chassis, is located in the free space so as to form a part of the grass conveying route.

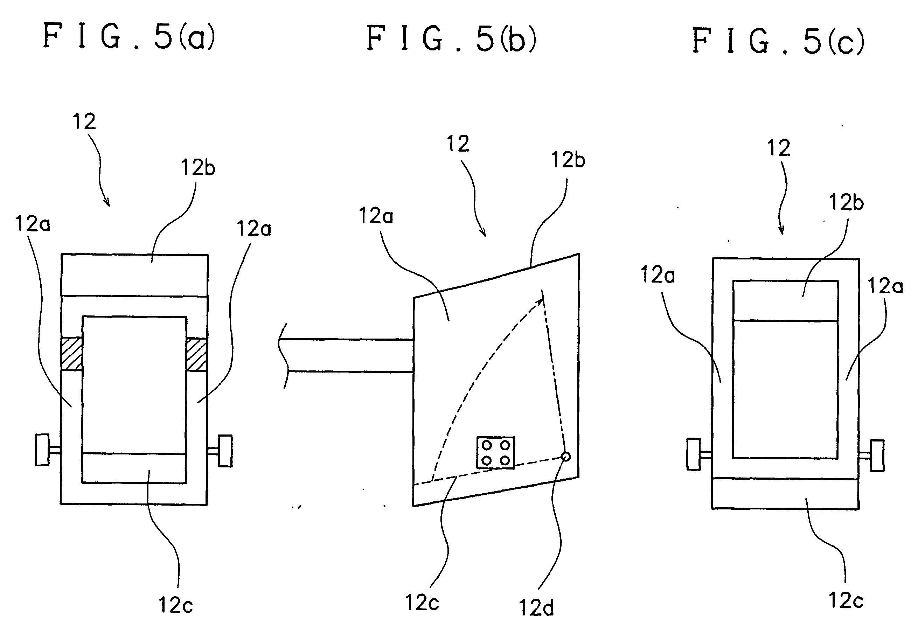

FIGS. 5(a)-5(c) are respectively front, side and rear views of the rear-wheel support member 12. As illustrated in FIG. 4, the rear-wheel support member 12 has a pair of side walls 12a, 12a for respectively supporting a pair of driving axles (rear axles 41a, 41b in this embodiment), and upper wall 12b and bottom wall 12c extending between the pair of side walls 12a, 12a, and is formed into a hollowed box shape with front and rear openings.

As illustrated in FIG. 1 and other Figures, the front opening of the rear-wheel support member 12 is communicated with a discharge opening of the mower device 50 and the rear opening of the same is communicated with the collection container 60.

In the thus arranged mower tractor 1, the rear axles 41a, 41b as the driving axles are supported by the rear-wheel support member 12, which serves as a part of the chassis 10 and has a hollowed body with the front and rear open ends. As a result, it is possible to form the conveying route from the mower device 50 to the collection container 60, while stably supporting the rear axles 41a, 41b.

Pivot shaft 12d, which extends in the width direction of the chassis, is preferably provided in proximity of the rear end of the rear-wheel support member 12 so as to pivotably move the bottom wall 12c around the pivot shaft 12d. With this arrangement, grass, which has been fed from the mower device 50 and accidentally held in the rear-wheel support member 12, can be easily moved to the collection container 60.

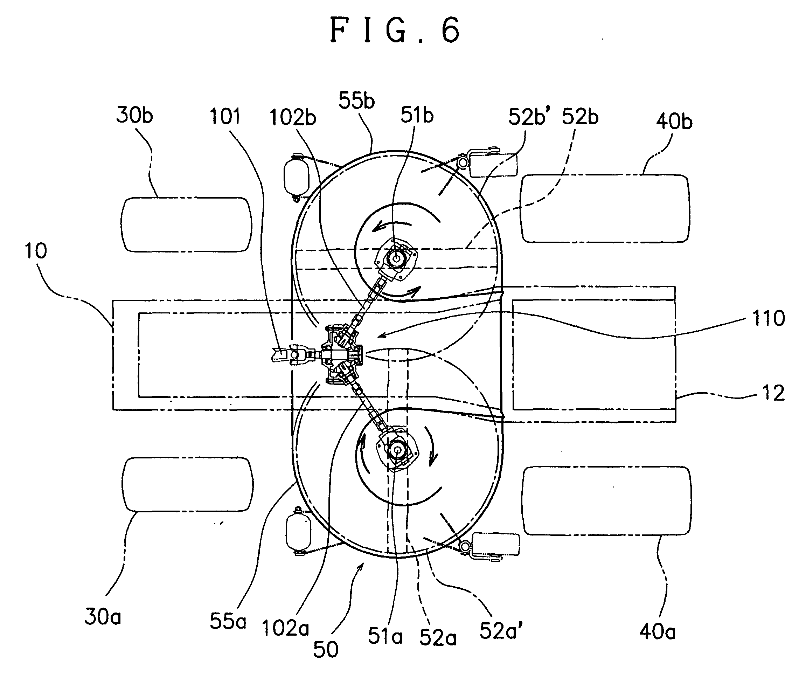

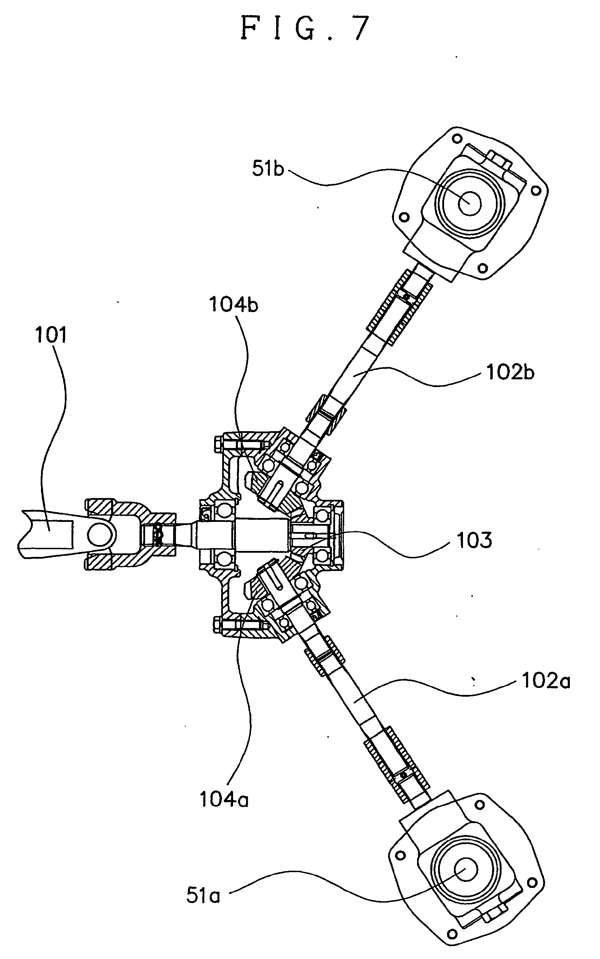

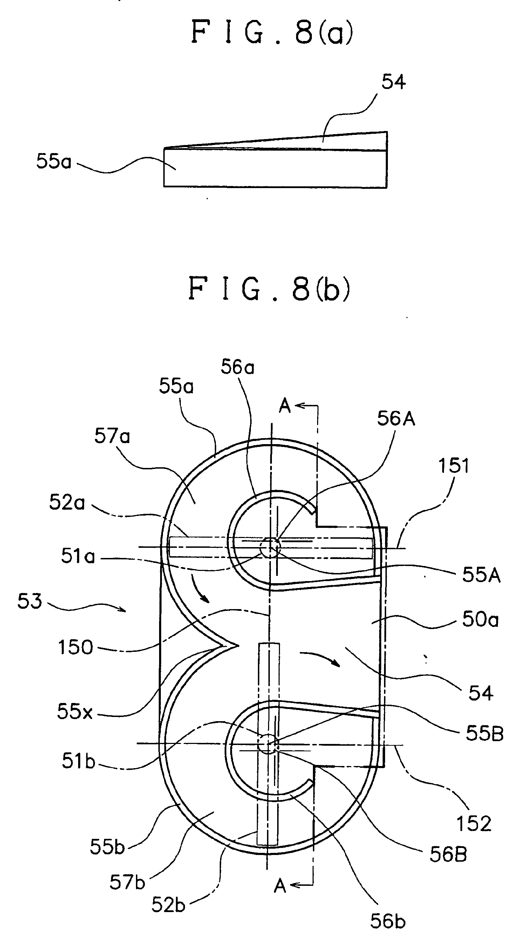

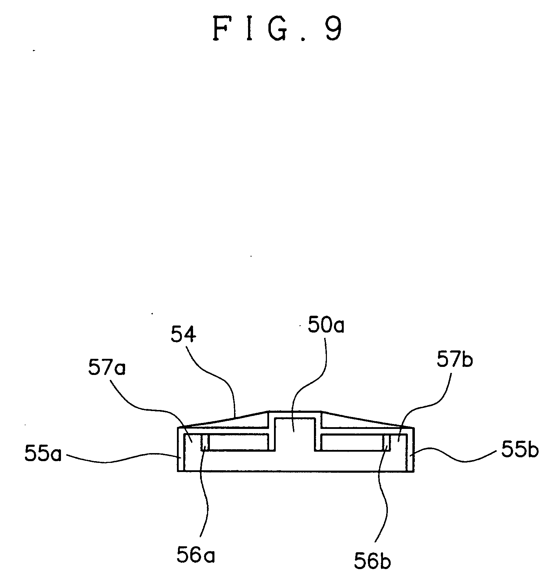

Now, the description will be made for the mower device 50. FIG. 6 is a plan view illustrating the mower device 50 and its proximity, and a view as viewed along line A-A in FIG. 1. FIG. 7 is a cross section of a portion illustrated in FIG. 6 with a part thereof illustrated in detail. FIGS. 8(a) and 8(b) are respectively side and bottom plan views of a mower casing in the mower device 50. FIG. 9 is a view as viewed from line B-B in FIG. 8(b).

The mower device 50 includes first and second vertical rotating shafts 51a, 51b aligned parallel to each other, first and second cutting blades 52a, 52b that are respectively rotated in the opposite directions by the first and second vertical rotating shafts 51a, 51b, and mower casing 53 that surrounds rotational trajectories 52a', 52b' of the first and second cutting blades 52a, 52b and has common discharge opening 50a for discharging cut grass, which is positioned between the first and second vertical rotating shafts 51a, 51b and opened in the direction orthogonal to common vertical plain surface 150, on which the first and second vertical rotating shafts 51a, 51b lie.

As illustrated in FIGS. 6 and 7, in this embodiment, the first and second vertical rotating shafts 51a, 51b are disposed in the width direction of the chassis, so that the discharge opening 50a of the mower casing 53 is opened towards the rear side of the chassis in the longitudinal direction thereof.

In this embodiment, in order to shorten the length of the mower device 50 in the width direction of the chassis, the first and second cutting blades 52a, 52b are arranged to have the rotational trajectories 52a', 52b' partly overlapped to each other. Therefore, the first and second vertical rotating shafts 51a, 51b are rotated in synchronization with each other so as to prevent contact between the first and second cutting blades 52a, 52b. Arrows in FIGS. 6 and 8(b) represent the rotating directions of the first and second cutting blades 52a, 52b.

The mower casing 53 includes upper wall 54 positioned above the first and second cutting blades 52a, 52b so as to support the first and second vertical rotating shafts 51a, 51b, first and second outer circumferential walls 55a, 55b extending downwards from the upper wall so as to respectively surround the rotational trajectories of the first and second cutting blades 52a, 52b, and first and second inner circumferential portions 56a, 56b vertically extending and being located on the radially inner side of the first and second outer circumferential walls 55a, 55b.

The first inner circumferential portion 56a and the first outer circumferential wall 55a together forms first conveying space 57a, which guides grass cut by the first cutting blade 52a to the discharge opening 50a. On the other hand, the second inner circumferential portion 56b and the second outer circumferential wall 55b together form second conveying space 57b, which guides grass cut by the second cutting blade 52b to the discharge opening 50a. The first and second conveying spaces 57a, 57b are joined together on the downstream side relative to the rotational directions of first and second cutting blades 52a, 52b, and then communicated with the discharge opening 50a.

As illustrated in FIG. 8(b), the first and second outer circumferential walls 55a, 55b respectively have circular centers 55A, 55B substantially identical in position to the axes of the first and second vertical rotating shafts 51a, 51b.

On the other hand, the first inner circumferential portion 56a has circular center 56A that is located on the outer side of first vertical plain surface 151 relative to the width direction, the first vertical plain surface 151 on which the first vertical rotating shaft 51a lies being orthogonal to the common vertical plain surface 150, or that is located spaced farther apart from the common discharge opening 50a than the first vertical plain surface 151 is.

Likewise, the second inner circumferential portion 56b has circular center 56B that is located on the outer side of second vertical plain surface 152 relative to the width direction, the second vertical plain surface 152 on which the second vertical rotating shaft 51b lies being orthogonal to the common vertical plain surface 150, or that is located spaced farther apart from the common discharge opening 50a than the second vertical plain surface 152 is.

By thus displacing the circular centers 56A, 56B of the first and second inner circumferential portions 56a, 56b respectively to the outer sides of the circular centers 55A, 55B of the corresponding outer circumferential walls 55a, 55b, the horizontal width of each of the first and second conveying spaces 57a, 57b is gradually increased in the rotational direction of the corresponding cutting blade. That is, as illustrated in FIG. 6(b), with the above arrangement, the first conveying space 57a and the second conveying space 57b respectively have cross sectional areas gradually increased from their proximal ends as they advance downstream of the rotational directions of the cutting blades, and these spaces are joined together and then communicated with the discharge opening 50a. Therefore, grass cut by the first and second cutting blades 52a, 52b can be smoothly discharged through the discharge opening.

The circular centers 56A, 56B of the first and second inner circumferential portions 56a, 56b are preferably located on the rear side of the common vertical plain surface 150, as illustrated in FIG. 8(b). With this arrangement, the cross sectional areas of the first and second conveying spaces 57a, 57b can be gradually increased as they advance downstream of the rotational directions of the cutting blades, while the starting points of the first and second inner circumferential portions 56a, 56b on their proximal sides can be respectively located on the rear sides of the common vertical plain surface 150. Thus, the circumferential length of each of the first and second conveying spaces 57a, 57b can be increased, so that grass cut by the first and second cutting blades 52a, 52b can be more smoothly discharged through the discharge opening 50a.

Of the upper wall 54, portions corresponding to the first and second conveying spaces 57a, 57b are preferably oriented upwards so as to gradually increase the diameters of the spaces as these spaces advance from the distal ends (see FIGS. 8(a) and 9). With this arrangement, it is possible to accelerate the increase rate of the cross sectional area of each of the first and second conveying spaces 57a, 57b from the proximal side to the downstream side, so that grass can be more smoothly conveyed.

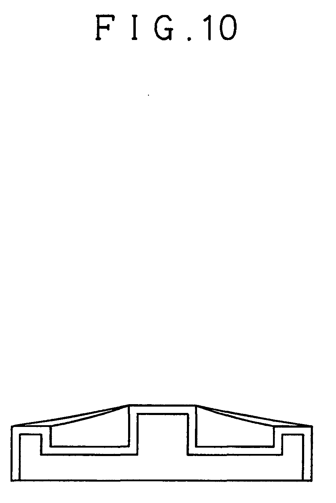

In this embodiment, the inner circumferential portions extend downwards from the upper wall. Alternatively, as illustrated in FIG. 10, the upper wall may be shaped to have its part forming the inner circumferential portions.

Now, the description will be made for a drive-power transmission structure from the driving source 20 to the mower device 50 with reference to FIGS. 1, 6 and 7.

The drive-power transmission structure for the mower device in the mower tractor 1 includes main-drive shaft 101 for the mower device, which is operatively connected with the driving source 20, and first and second connecting shafts 102a, 102b for connecting the main-drive shaft 101 with the first and second vertical rotating shafts 51a, 51b in the mower device 50.

As illustrated in FIGS. 1, 6 and 7, the main-drive shaft 101 has a front end operatively connected with the driving source 20 located closer to the front side of the chassis 10, via a suitable transmission mechanism such as a pulley so as to transmit drive power from the front side to the rear side in the longitudinal direction of the chassis 10.

The main-drive shaft 101 also has a rear end located on the front side of the first and second vertical rotating shafts 51a, 51b in the longitudinal direction of the chassis. In this embodiment, dividing device 110 is disposed on an upper surface of the mower casing 53 so as to support the rear end of the main-drive shaft 101. The dividing device 110 is preferably located in proximity of or on the front side of join point 55X of the first and second outer circumferential walls 55a, 55b in the mower casing 53. The thus located dividing device 110 is prevented from becoming an obstacle to increase in diameter of each of first and second conveying spaces 57a, 57b in the upward direction.

The first and second connecting shafts 102a, 102b are coupled with the main-drive shaft so as to be synchronously rotated in the opposite directions when seen along the transmission direction.

In this embodiment, drive-side bevel gear 103 is relatively non-rotatably supported to the rear end of the main-drive shaft 101, while first and second driven-side bevel gears 104a, 104b in meshed engagement with the drive-side bevel gear 103 are respectively and relatively non-rotatably supported to the front ends of the first and second connecting shafts 102a, 102b, thereby allowing the first and second connecting shafts 102a, 102b to be synchronously rotated in the opposite directions.

Thus, in this embodiment, the shaft drive transmission from the main-drive shaft 101 to the first and second vertical rotating shafts 51a, 51b achieves secured and efficient rotation control of the first and second vertical rotating shafts 51a,51b.

That is, if the main-drive shaft, which is operatively connected with the driving source, is connected with the first and second vertical rotating shafts via pulleys and belts, tensions of the belts must be adjusted, which causes problems that the structure becomes complicated and a troublesome maintenance work must be done. Also, as another problem, belt slippage or the like is easily caused.

On the contrary, in this embodiment, the shaft connection of the main-drive shaft 101 with the first and second vertical rotating shafts 51a, 51b allows the first and second vertical rotating shafts to be synchronously rotated in a secured and efficient manner.

## Claims

1. A drive-power transmission structure for a mower device for transmitting drive power from a driving source disposed on a chassis to the mower device, which has plural rotating shafts and disposed under the chassis between front wheels and rear wheels, comprising:
a main-drive shaft for the mower device, which is operatively connected with the driving source, wherein
said main-drive shaft is connected with said plural rotating shafts via shafts.

2. The drive-power transmission structure according to claim 1, further comprising a pair of connecting shafts respectively have front ends and rear ends, wherein:
said plural rotating shafts are a pair of vertical rotating shafts located at substantially the same position relative to the longitudinal direction of said chassis;
said main-drive shaft is designed to transmit drive power from a front side to a rear side in the longitudinal direction of said chassis, and has a rear end terminated on the front side of said pair of vertical rotating shafts in the longitudinal direction of said chassis; and
said front ends of said pair of connecting shafts are connected with the rear end of said main-drive shaft, while said rear ends thereof are respectively connected with said pair of rotating shafts so as to provide connections between the main-drive shaft and said plural rotating shafts.

3. The drive-power transmission structure according to claim 2, wherein:
said main-drive shaft is aligned along the longitudinal direction of the chassis and in the center of the width of said chassis; and
said pair of connecting shafts respectively have said front ends located closer to the center of the width of the chassis, and said rear ends on the outer sides of said front ends relative to the width direction of said chassis and on the rear side of said front ends relative to the longitudinal direction of said chassis.

4. A mower casing for surrounding rotational trajectories of first and second cutting blades that are rotated in the opposite directions by first and second vertical rotating shafts aligned parallel to each other, said mower casing being formed to have a common discharge opening for discharging cut grass, said common discharge opening being located between said first and second vertical rotating shafts and opened in a direction orthogonal to common vertical plain surface, on which said first and second vertical rotating shafts lie; comprising an upper wall located above said first and second cutting blades so as to support said first and second vertical rotating shafts;
first and second outer circumferential walls extending downwards from said upper wall so as to surround said rotational trajectories of said first and second cutting blades;
first and second inner circumferential portions respectively located on the radially inner sides of said first and second outer circumferential walls, and respectively defining first and second conveying spaces in cooperation with said first and second outer circumferential walls so as to convey cut grass therethrough; wherein
said first and second conveying spaces are joined together on the downstream side relative to rotational directions of said first and second cutting blades and communicated with said common discharge opening;
said first and second outer circumferential walls respectively have circular centers located at substantially the same positions as axes of said first and second vertical rotating shafts;
said first inner circumferential portion has a circular center located spaced farther apart from said common discharge opening than a first vertical plain surface is, wherein said first vertical plain surface, on which said first vertical rotating shaft lies, is orthogonal to said common vertical plain surface; and said second inner circumferential portion has a circular center located spaced farther apart from said common discharge opening than a second vertical plain surface is, wherein said second vertical plain surface, on which said second vertical rotating shaft lies, is orthogonal to said common vertical plain surface.

5. The mower casing according to claim 4, wherein said common discharge opening, and said circular centers of said first and second inner circumferential portions are located on the downstream side of said common vertical plain surface relative to the rotational directions of said first and second cutting blades.

6. The mower casing according to any one of claims 4 and 5, wherein said first and second conveying spaces respectively have diameters increased in the upward direction as they advance along the rotational directions of said first and second cutting blades.

7. A mower tractor comprising:
a chassis;
a driving source supported by said chassis;
front wheels supported by said chassis;
driving rear wheels supported by said chassis;
a mower device located under said chassis between said front wheels and said driving rear wheels so as to have a grass discharge opening located within a range defined by the width of said chassis and directed rearwards in a longitudinal direction of said chassis;
a dividing device provided on the front side of the driving rear wheels in the longitudinal direction of said chassis, wherein said dividing device includes a pair of output shafts and is operatively connected with said driving source so as to divide drive power from said driving source and output the same through said pair of output shafts; wherein
said driving rear wheels are driven by a pair of driving axles, which are spaced apart from each other;
said pair of output shafts and said pair of driving axles are respectively connected with each other via shafts so as to form a space between said pair of rear wheels;
said chassis has a rear-wheel support member for supporting said rear wheels, said rear-wheel support member including a pair of side walls for respectively supporting said pair of driving axles and an upper wall extending between said pair of side walls, and being formed into a hollowed box shape with front and rear openings; and
said rear-wheel support member is located within said space so as to have the front opening being communicated with a discharge opening of said mower device.

8. A running-power transmission structure for a vehicle for transmitting running power from a driving source disposed on a chassis to a pair of driving wheels, comprising:
a dividing device having a pair of output shafts and being operatively connected with said driving source so as to divide drive power from said driving source and output the same through said pair of output shafts; wherein
said dividing device is located closer to said driving source than said pair of driving wheels are; and
said pair of output shafts of said dividing device are operatively connected with input parts of said pair of driving wheels.

9. The running-power transmission structure according to claim 8, wherein said pair of driving wheels are rear wheels;
said dividing device is a differential gear device having a pair of output shafts extending in the width direction of said chassis; and
said pair of output shafts respectively have outer ends relative to the width direction of said chassis, said outer ends being located closer to the center of the width of said chassis than said input parts of said pair of driving wheels are.

10. The running-power transmission structure according to claim 9, wherein a pair of running-power connecting shafts are provided between said pair of output shafts of said differential gear device and said input parts of said pair of driving wheels; and
connections between said running-power connecting shaft, said pair of output shafts and said input parts of said pair of driving wheels are made via bevel gears.
